Europäisches Patentamt

European Patent Office

Office européen des brevets

(19)

(11) Publication number : **0 570 221 A2**

# EUROPEAN PATENT APPLICATION

(12)

(21) Application number : **93303705.3**

(22) Date of filing : **13.05.93**

(51) Int. Cl.$^5$ : **C08J 9/12,** // C08L23/26, B65D1/34

(30) Priority : **13.05.92 US 882332**

(43) Date of publication of application : **18.11.93 Bulletin 93/46**

(84) Designated Contracting States :
**AT BE CH DE DK ES FR GB GR IE IT LI LU NL PT SE**

(71) Applicant : **W.R. Grace & Co.-Conn.
Grace Plaza, 1114 Avenue of the Americas
New York, New York 10036-7794 (US)**

(72) Inventor : **Hessen, Thomas A.
641 Ridgeview Drive
Ephrata, PA 17522 (US)**
Inventor : **Gusavage, Gary M.
420 Trena Avenue
Lancaster, PA 17601 (US)**
Inventor : **Laiewski, Stan J.
618 Jefferson Boulevard
Reading, PA 19609 (US)**
Inventor : **Schirmer, Henry G.
156 Edgecombe Road
Spartanburg, SC 29302 (US)**

(74) Representative : **Bentham, Stephen
J.A. Kemp & Co. 14 South Square Gray's Inn
London, WC1R 5LX (GB)**

(54) **Polypropylene foam.**

(57)    Foamed polypropylene sheets and articles thermoformed therefrom are suitable for microwaving and are produced by providing a polypropylene composition exhibiting uniform melt draw properties, heating the composition, injecting a blowing agent, preferably carbon dioxide or a carbon dioxide hydrocarbon blend, and extruding the blend into a sheet which may then be thermoformed into articles such as trays.

EP 0 570 221 A2

This invention is directed to the art of polypropylene foam sheets. More specifically, this invention is directed to a novel method of producing polypropylene foam sheets while reducing or eliminating the use of undesirable hydrocarbon blowing agents.

The production of foam sheets through a continuous extrusion process is well known in the art. Foamed sheets of polystyrene and polyurethane are widely manufactured and employed in a multitude of industries. However, the manufacturers of such foam sheets have relied upon hydrocarbon blowing agents including chlorofluorocarbons such as freon and related compounds. Additionally, blends of hydrocarbons with atmospheric gases have been employed to form sheets of polyurethane and polystyrene.

U.S. Patent No. 4,344,710 (August 17, 1982) issued to Johnson et al and U.S. Patent No. 4,424,287 (January 3, 1984) issued to Johnson et al disclose a polymer foam extrusion system and process in which blends of alkanes and $CO_2$ gas are used to foam polymers such as polystyrene.

U.S. Patent No. 4,916,198 to Scheve et al discloses a high molecular weight propylene polymer characterized by high melt strength due to strain hardening which is believed to be caused by free-end long chain branches of the molecular chains forming the polymer.

U.S. Patent No. 4,365,044 to Liu discloses a composition comprising crystalline polypropylene, a hydrogenated copolymer of vinyl toluene and alpha-methyl styrene and low density polyethylene.

U.S. Patent No. 5,047,446 to DeNicola, Jr. discloses a method of treating a free radical containing propylene polymer material which results in the production of more long chain branching.

U.S. Patent No. 5,047,485 to DeNicola, Jr. discloses a process for making a propylene polymer having free-end branches of propylene units.

Other publications include European Patent Disclosure No. 0411923A2 to Welsh which teaches using 100% $CO_2$ to foam polystyrene as does Australian Patent Disclosure No. 52724/79 issued to Hall et al.

However, to date, the production of polypropylene foam sheets using $CO_2$ as a blowing agent has not been possible on conventional extruder equipment.

Such foam sheets are desirable given the higher heat distortion temperature of polypropylene compared to styrene allowing polypropylene foam sheets to be used in higher heat applications. The use of $CO_2$ instead of a conventional hydrocarbon blowing agent eliminates the cure time required prior to further processing. Partial replacement of a hydrocarbon blowing agent provides a shortened cure time. Other advantages which the use of at least partial $CO_2$ for expansion provides to the end product tray are discussed in greater detail in copending U.S. Serial No. 882331. Therefore, there is a need in the art for a polypropylene foam sheet which can be produced using only $CO_2$ as a blowing agent.

It is thus an object of the present invention to provide a method for manufacturing polypropylene foam sheets.

It is a further object of the invention to provide a polypropylene foam sheet which reduces the amount of hydrocarbons used in the production of polypropylene foam.

It is a still further object of this invention to provide a polypropylene foam sheet using only $CO_2$ as a blowing agent.

It is yet another object of the present invention to provide a blown foam sheet of a polypropylene having improved melt strength provided by long chain branching.

It is still a further and more particular object of this invention to provide a polypropylene foam sheet which is capable of being thermoformed.

It is yet another object of the present invention to provide a thermoformed polypropylene product which is capable of being heated in a microwave oven. These and other objects are achieved by providing a method for producing a polypropylene foam sheet which includes the steps of providing a polypropylene composition which contains at least some long chain branches, heating the polyproyplene composition to form a melt, injecting a blowing agent into the melt, and extruding the blowing agent-containing melt into a sheet.

The present objects are further achieved by providing a method for producing a thermoformed, foamed article which includes the steps of providing a polypropylene composition which has at least some long chain branching, heating the polypropylene composition to form a melt, injecting a blowing agent into the melt, extruding the melt into a sheet, and thermoforming the sheet into articles. Preferably, the excess, non-formed sheet is trimmed and then reintroduced into the polypropylene composition.

Moreover, the present objects are achieved by providing a foamed, thermoformed article which is composed of polypropylene and which is substantially free of any volatile hydrocarbon residue.

Figure 1 illustrates the extruders of the present invention; and

Figure 2 illustrates foamed. polypropylene sheeting being extruded, coded and wound.

In accordance with this invention, it has been found that foamed polypropylene sheets can be produced by a tandem extrusion process (two extruders in series). The first extruder melts the polymer to produce a polymer melt. A high pressure metering pump then delivers blowing agents to the polymer melt at the end of

2

the first extruder when mixing is initiated prior to entering the second extruder where further mixing and cooling of the blowing agent and the polymer melt occurs. After exiting the second extruder the polymer melt then passes through and becomes a foam structure at an annular die. The foam structure, in the shape of an annular tube, is then stretched over a forming mandrel. The annular tube coming off the mandrel is then slit and opened to form a sheet which is then gathered one one or more rolls, The sheet is then thermoformed into a packaging article such as a tray.

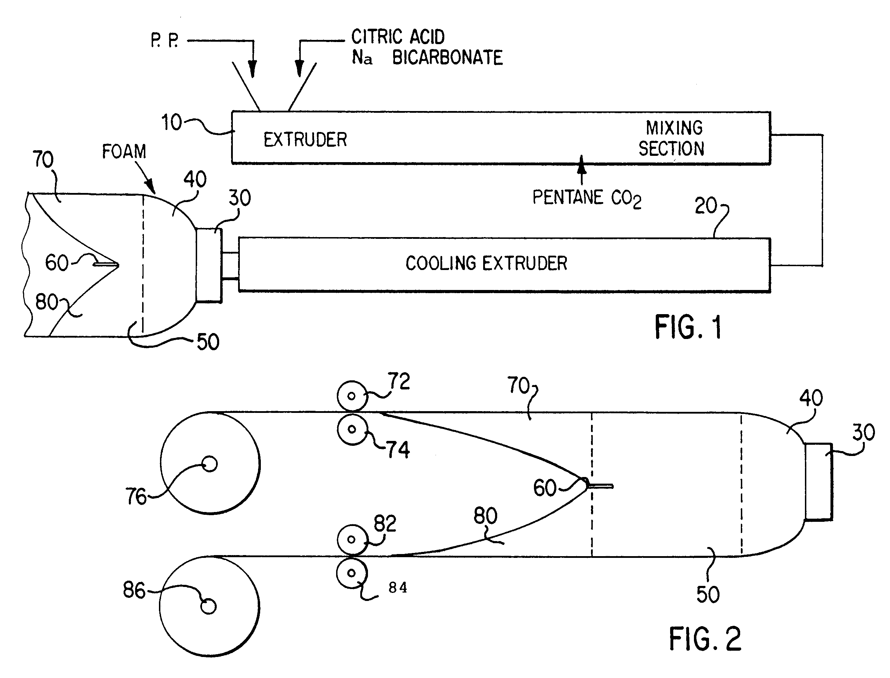

Looking more particularly to Figure 1, first extruder 10 is a heating and mixing extruder wherein polypropylene and a nucleating agent such as citric acid or sodium bicarbonate are introduced at an entrance end. After the polypropylene is heated to approximately 400°F to 450°F, a blowing agent is introduced. Typically, for the expansion of polymeric materials, a hydrocarbon blowing agent such as isobutane or pentane is preferred. However, for the expansion of polypropylene, carbon dioxide is a desirable blowing agent. For the present invention, blends of pentane or isobutane and carbon dioxide are acceptable. However, the use of 100% $CO_2$ for the blowing agent is preferred.

Following introduction of the blowing agent, the polymer melt enters the mixing section of extruder 10. Thereafter the melt exits extruder 10 and is injected into cooling extruder 20 for further mixing and cooling. Upon exiting extruder 20 the melt is between 300°F and 340°F. It is then forced through annular die 30 and exits the die as an annular foam tube 40. The annular tube is stretched over cooling mandrel 50 (shown in phantoms). For the present invention, the ratio of the diameter of the foam tube at the cooling mandrel to the diameter of the tube as it exits the die, commonly referred to as the blow-up ratio, is 2:1.

As is shown in Figure 2, as the tube comes off the mandrel 50 it is cut into two sheets 70 and 80, by slitter 60. Pull rolls 72 and 74 and 82 and 84 lead sheets 70 and 80 to winders 76 and 86, respectively.

It has been found in accordance with the present invention that successful polypropylene foam production is possible when the thermoplastic polypropylene resin composition exhibits uniform melt draw properties. One way to achieve such is to include at least some long chain branching. The long chain branching increases melt strength which improves processability. One known commercially available polypropylene which exhibits uniform melt draw properties is the X8603-78-4 (commercially available as PF 814) resin supplied by Himont. Although the exact composition and method for making the Himont resin is not known, it is believed that it is an irradiated, high melt strength polypropylene having long chain branches Examples of such resins and methods for making such are disclosed in U.S. Patent Nos. 4,916,198; 5,047,446; and 5,047,485, all assigned to Himont and discussed above.

Specifically, it was found that when the Himont resin was employed as the polypropylene resin composition of the present invention, problems encountered with low melt strength, linear polypropylene were eliminated. That is, when conventional linear polypropylene was employed, the resulting foam sheets developed holes and gaps upon exiting the extruder. This failure is a result of the poor melt draw of linear polpropylene. When molten, linear polypropylene exhibits no strain hardening (an increase in resistance to stretching during elongaticn of the molten material). Thus, as molten linear polypropylene is drawn from a fixed point it eventually thins to nothing, exhibiting ductile or necking failure. However, when the PF-814 resin in a molten state is drawn from a fixed point, it will eventually break, exhibiting elastic failure which is indicative of strain hardening, which relates to, a uniform melt draw. For the present invention, a uniform melt draw is necessary for extrusion of the polypropylene foam and for stretching the extruded foam tube over the cooling mandrel without thinning and gaps in the tube.

It has further been found that in accordance with the present invention that low melt strength linear polypropylene resins can be blended with polymers or copolymers having desirable melt draw properties in the production of a thermoformable polypropylene foam. One example of an appropriate blending agent is butyl rubber. Commercially available linear polypropylene resins which incorporate a rubber have been found in accordance with this invention to exhibit sufficient melt strength to provide a uniform melt draw for extrusion as a foamed sheet. Exxon's PD 7292N is an example of a linear polypropylene with a butyl rubber incorporated therein. Other blends of linear polypropylene with other polyolefins having similar melt draw properties are described in the Liu patent discussed above.

Polypropylene sheets made in accordance with the present invention may optionally have adhered thereto a barrier film such as is described in the above-mentioned simultaneously filed patent application entitled "Barrier Polystyrene Foam Trays." However, regardless of the inclusion of a barrier film the present sheets are preferably thermoformed into tray shapes and cut into trays.

For the thermoforming process, the roll of polypropylene sheet is fed through an oven to heat it to near its softening point. The hot sheet is then forced into tray molds by vacuum, air, and mechanical pressure. The molded sheet is then fed through a trim press where a punch and die mechanism cuts the indiviual rigid trays from the sheet.

Polypropylene scrap is generated in both the extrusion and thermoforming operations. Extrusion scrap is mainly in foam sheet form and results from machine start-ups and size and color changes. Thermoforming scrap is primarily trim scrap, the skeleton remaining after the trays are cut from the foam sheet, and trays rejected for quality control criteria. In a barrier foam tray application, that is, a tray made from a polypropylene sheet of the present invention with a barrier film laminated thereto, such as described in the above-mentioned copending patent application, the thermoforming scrap will include polypropylene foam elements as well as barrier film elements. This presents a special recycling problem which is addressed more particularly in such copending application. Regardless of the composition of the scrap, reprocessing of such is accomplished by first grinding the scrap into a "fluff" form then extruding the fluff into pellet form which is then reusable in the foam sheet extrusion process.

The following examples are directed to the extrusion of various types of polypropylene resins into foam sheets. The addition of reclaim in some of the Examples refers to reprocessed scrap of the virgin polypropylene.

Traditional blowing agents such as pentane and isobutane can be used to foam polypropylene. However, it has also been found that 100% $CO_2$ can be used to produce a high quality polypropylene foam sheet. While blends of alkanes with $CO_2$ may also be used to foam polypropylene, the use of 100% $CO_2$ is preferable given the lower cost, the greater work safety and the environmental incentives which accompany the reduced hydrocarbon emissions.

While the apparatuses and techniques required to make polypropylene foam sheets in accordance with this invention is similar to that used to make polystyrene foam sheets, certain modifications were found to be necessary. The physical properties of polypropylene require that a higher extruder melt temperature be provided than those typically employed in polystyrene production. It was found that when using only $CO_2$ as a blowing agent, successful blends require a high line pressure and a high volume of $CO_2$. To achieve the needed levels of $CO_2$, a high pressure pumping system capable of handling 5000 pounds of pressure is employed to provide the desired volume and pressure of $CO_2$ into the extruder. Further, an additional pump is installed in parallel with the original pump in order to achieve the needed volume of $CO_2$. While only $CO_2$ gas was used in foam sheet production, with the proper extruder hardware, liquid $CO_2$ could be used to blow foam as well.

It has also been found that the cooling and stretching properties of polypropylene foam requires a slightly different mandrel diameter to die diameter ratio than those typically employed in polystyrene foam production. It has been found that using a 16 inch mandrel, a 2:1 ratio of mandrel diameter to die lip diameter provides sufficient cooling and stretching of the foam sheet without unwanted curling of the sheet. However, other ratios would suffice as well.

The foamed sheets blown with 100% $CO_2$ are essentially free of undesired volatile compounds which are commonly present in hydrocarbon blown polypropylene. Thus, there is no need to cure $CO_2$ blown foam sheets before use as is often necessary when using hydrocarbon blowing agents. Therefore, it is possible to go directly from the extruder to other processing or shipping activities without curing delays. Foam produced with 100% $CO_2$ in accordance with this invention can be fed directly into a thermoforming or laminating device without any post heating expansion of the foam commonly experienced with alkane blown polystyrene. This ability reduces the amount of storage space previously needed for curing the inventory of traditionally manufactured polypropylene foam sheets made with hydrocarbons.

Having generally described the invention, the following examples are given as a further explanation thereof, but are not intended to limit the invention thereby.

## EXAMPLE 1

### RUN 1

As seen in table 1, the foam sheets of run 1 were manufactured as described above using 100% Himont virgin polypropylene blended with 1.3% by weight of isobutane, forming a foam sheet having an average basis weight of 21.53.

### RUN 2(a)

The foam sheets of Run 2(a) were manufactured using 50% Himont virgin propylene and 50% Himont reclaim. The melted mixture was blended with 1.5% by weight of liquid isobutane forming a foam sheet averaging 19.4 basis weight.

### RUN 2(b)

This run was repeated under the conditions of Run 2(a) but this time the mixture was blended with 2.1% by weight of liquid isobutane producing a foam sheet with a larger cell size than Run 2(a) and having an average basis of 21.92.

RUN (3)

Run 3 was identical to Run 2(a) except a liquid pentane blowing agent, blended at 2.3% by weight with the polypropylene mixture, was employed forming a foam sheet with an average basis weight of 22.22.

RUN 4

Run 4 was identical to Run 2(a) except $CO_2$ gas was used as the blowing agent blended with the polypropylene mixture at 0.96% by weight forming a foam product with an average basis weight of 20.17.

TABLE 1

POLYPROPYLENE FOAM

| | | RUN #1 | RUN #2A | RUN #2B | RUN #3 | RUN #4 |
|---|---|---|---|---|---|---|
| BASIS WEIGHT (gms/60 sq.inches) | 1 | 22.72 | 17.8 | 22.28 | 21.16 | 19.82 |
| | 2 | 21.71 | 18.58 | 20.17 | 20.66 | 19.81 |
| | 3 | 20.16 | 21.86 | 23.3 | 24.35 | 20.87 |
| AVG. | | 21.53 | 19.41 | 21.92 | 22.22 | 20.17 |
| THICKNESS (inches) | 1 | 0.231 | 0.115 | 0.100 | 0.091 | 0.065 |
| | 2 | 0.140 | 0.120 | 0.108 | 0.095 | 0.077 |
| | 3 | 0.185 | 0.106 | 0.116 | 0.088 | 0.086 |
| | 4 | 0.165 | 0.110 | 0.127 | 0.077 | 0.084 |
| | 5 | 0.229 | 0.105 | 0.122 | 0.073 | 0.090 |
| | 6 | 0.205 | 0.108 | 0.125 | 0.075 | 0.080 |
| | 7 | 0.185 | 0.104 | 0.127 | 0.080 | 0.085 |
| | 8 | 0.240 | 0.118 | 0.133 | 0.079 | 0.089 |
| | 9 | 0.240 | 0.127 | 0.134 | 0.074 | 0.083 |
| | 10 | 0.200 | 0.144 | 0.123 | 0.069 | 0.067 |
| AVG. | | 0.202 | 0.116 | 0.122 | 0.080 | 0.081 |
| DENSITY (lbs./cubic feet) | | 6.76 | 10.61 | 11.49 | 17.75 | 15.8 |
| VOLATILES (% by weight of total material) | | 0.51 | 0.68 | 0.77 | 1.52 | 0 |
| CELL DIAMETER (mm) | | 1.630 | 0.410 | 3.000 | 0.370 | 0.300 |
| ORIENTATION (% of sample shrinkage) | | | | | | |
| CMD (cross machine diameter) | | -16 | -5 | -4 | -8 | -2 |
| MD (machine diameter) | | -20 | -10 | -15 | -22 | -14 |
| BLEND HIMONT VIRGIN | | 100% | 50% | 50% | 50% | 50% |
| HIMONT RECLAIM | | 0 | 50% | 50% | 50% | 50% |
| BLOWING AGENT (100%) | | ISOBUTANE | ISOBUTANE | ISOBUTANE | PENTANE | CARBONDIOXIDE |

NOTE: CELL SIZES WERE INFLUENCED BY THE CELL SHAPES (ELONGATED VS. SPHERICAL)

## EXAMPLE 2

It is a desirable and important feature that the foam sheets be amenable to secondary uses such as thermoformin. Therefore, foam sheets produced as described above and having the additional characteristics as seen in Table 1, were thermoformed using standard vacuum forming protocols into packaging trays. With $CO_2$ blown foam sheets, it is possible to immediately thermoform foam. Alkane blown foam requires a curing period to allow volatile components to escape. The tray size was 8.76 by 6.67 by 1.72 inches and trays were formed on wooden, uncooled molds.

TRAY RUN NUMBER 1

Tray Run Number 1 used foam sheet number 1 as described above in Example 1, Run Number 1. The upper oven temperature was set at 575°F, the lower oven temperature set at 590°F. As seen in Table 2, the trays produced in Tray Run Number 1 were thermoformed having a heat time of 13.0 seconds and a form time of 10.5 seconds. The tray product had a very poor appearance with a wrinkled inside surface and a rough outside surface.

TRAY RUN NUMBER 2(a)

Tray Run Number 2(a), using foam sheet produced in Example 1, Run Number 2(a) above, was identical to Tray Run Number 1 except the heat time was reduced to 12.0 seconds. Again, a poor product appearance resulted with uneven inside surfaces with a smooth/wrinkled texture and a rough outside surface.

TRAY RUN NUMBER 2(b)

Tray Run Number 2(b), using foam sheet number 2(b) described above, was identical to Tray Run Number 1 except that the heating time was increased to 14.0 seconds. The thermoformed tray produced had a fair appearance with some wrinkles on an otherwise smooth interior surface and a coarse outside surface.

TRAY RUN NUMBER 3

Tray Run Number 3, using foam sheet number 3 described above, was identical Tray Run Number 1 except heating time was increased to 16.0 seconds. The thermoformed tray produced had a fair product appearance with some wrinkles on an otherwise smooth inside and outside surface.

TRAY RUN NUMBER 4

Tray Run Number 4, using the $CO_2$ blown foam sheet number 4 described above, was identical to Tray Run Number 1 except the heating time was increased to 18.0 seconds. The thermoformed tray had a good product appearance with relatively smooth inside and outside surfaces.

Table 2

| EXAMPLE 2 MOLDED TRAY RUN | | | | |
|---|---|---|---|---|
| Tray Size: 8.75 x 6.670 x 1.72 | | Mold Type: Wooden, Prototype, Not Cooled | | |
| SAMPLE NUMBER | | | | |
| #1 | #2A | #2B | #3 | #4 |
| Oven Heats (°F) | | | | |
| Top — 575 | 575 | 575 | 575 | 575 |
| Bottom — 590 | 590 | 590 | 590 | 590 |
| Heat Time (Sec.) — 13.0 | 12.0 | 14.0 | 16 | 18 |
| Forming Time (Sec.) — 10.5 | 10.5 | 10.5 | 10.5 | 10.5 |
| Product Appearance Form — Very Poor | Poor | Fair | Fair | Good |
| Surfaces: | | | | |
| Inside — Wrinkled | Smooth/Wrinkled | Smooth/Wrinkled | Smooth/Wrinkled | Relatively smooth |
| Outside — Course/Rough | Rough | Course | Smooth/Wrinkled | Relatively smooth |

## EXAMPLE 3

An additional tray production run was conducted similar to Example 2 above. In this production run, however, oven temperatures were reduced and heating times and forming times were increased. The resulting foam trays were consistently superior to the products attained in Example 2 above.

## TRAY RUN NUMBER 1

Tray Run Number 1, using foam sheet number 1 manufactured as described above, was conducted under the conditions as described in Table 3. The oven employed at upper heat temperature of 425°F and a lower heat temperature of 450°F. A heating time of 40.0 seconds was employed with a forming time of 20.0 seconds and resulted in a molded packaging tray having an overall poor appearance with a variable smooth inside surface and a coarse/rough textured outside surface.

## TRAY RUN NUMBER 2(a)

The conditions of Tray Run Number 2(a), using foam sheet 2(a), was identical to Example 3, Tray Run Number 1 except that the heating time was reduced to 35.0 seconds. The resulting trays had a fair product appearance with a smooth inside surface and a coarse to rough outer surface.

## TRAY RUN NUMBER 2(b)

Tray Run Number 2(b), using foam sheet number 2(b) as described above, was identical to Example 3, Tray Run Number 2(a). The resulting trays had a fair product appearance with a fairly smooth inside surface and a coarse outside surface.

TRAY RUN NUMBER 3

Tray Run Number 3, using foam sheet number 3, was identical to Example 3, Tray Run Number 2(a) above except the upper oven temperature was increased to 450°F. Overall tray appearance ranged from fair to good with a fairly smooth inside surface and outside surface.

TRAY RUN NUMBER 4

Tray Run Number 4, using foam sheet number 4, was identical to Example 3, Tray Run Number 1 above with the upper oven temperature increased to 450°F. A good quality tray was produced having a smooth inner surface and a smooth outer surface and having additional features as described in Table 3.

It was found that, under the conditions described above and outlined in Tables 1 through 3, the use of 100% carbon dioxide as the blowing agent produced an ultimate thermoformed foam product superior to the products obtained when conventional hydrocarbon blowing agents such as pentane or isobutane were used.

Further, unlike polystyrene foam, polypropylene foam sheets do not expand upon thermoforming or following compression through nip rollers. Instead, following compression and/or heating, the foam sheets rapidly restores to their initial thickness.

TABLE 3

| EXAMPLE 3 MOLDED TRAY RUN | | | | | |
|---|---|---|---|---|---|
| 6/26/91 | Tray Size: 8.75 x 6.672 x1.72 | | Mold Type: Wooden, Prototype, Not Cooled | | |
| SAMPLE NUMBER | | | | | |
| | #1 | #2A | #2B | #3 | #4 |
| Oven Heats (°F) | | | | | |
| Top | 425 | 425 | 425 | 450 | 450 |
| Bottom | 450 | 450 | 450 | 450 | 450 |
| Heat Time (Sec.) | 40 | 35 | 35 | 35 | 40 |
| Forming Time (Sec.) | 20 | 20 | 20 | 20 | 20 |
| Product Appearance Form | Poor | Fair | Fair | Fair/Good | Good |
| Surfaces: | | | | | |
| Inside | Somewhat Smooth | Smooth | Fairly smooth | Fairly Smooth | Smooth |
| Outside | Course/Rough | Course/Rough | Course | Fairly Smooth | Smooth |

Given the lower cost, greater manufacturing safety and the environmental concerns favoring $CO_2$ as opposed to traditional hydrocarbons, the use of 100% carbon dioxide to produce polypropylene foam is preferred. However, other traditional blowing agents or blends thereof with $CO_2$ can be used in making polypropylene foam.

EXAMPLE 4

A foam sheet was manufactured of 100% of PD 7292, a linear polypropylene from Exxon which includes a butyl rubber. The blowing agent was 100% $CO_2$. The resultant foam sheet had an excellent appearance with smooth outer surfaces.

EXAMPLE 5

A foam sheet was manufactured of 50% PF-814 from Himont and 50% polypropylene reclaim. The blowing agent was 100% $CO_2$. The resultant foam sheet had an excellent appearance with smooth outer surfaces.

EXAMPLE 6

A foam sheet was manufactured of 50% PF-814 from Himont and 50% PD 7292 from Exxon. The blowing agent was 100% $CO_2$. The resultant foam sheet had an excellent appearance with smooth outer surfaces.

EXAMPLE 7

A foam sheet was manufactured with 100% HimontPF-814 reclaimed from a previous run. The blowing agent was 100% $CO_2$. The resultant foam sheet had a fair appearance. The outer surface was smooth but the inner surface was rough throughout.

While certain representative embodiments and details have been shown for the purpose of illustration, numerous modifications to the formulations and processes described above can be made without departing from the invention disclosed and as defined by the following appended claims.

**Claims**

1. A method for producing a polypropylene foam sheet comprising:
    providing a polypropylene composition containing at least some long chain branching;
    heating the polypropylene composition to form a melt;
    injecting a blowing agent into the melt; and
    extruding the blowing agent-containing melt into a sheet.

2. A method according to claim 1 wherein the blowing agent comprises carbon dioxide.

3. A method according to claim 2 wherein the blowing agent further comprises a hydrocarbon.

4. A method according to any one of claims 1 to 3 wherein the polypropylene composition comprises a propylene polymer having long chain branching.

5. A method according to any one of claims 1 to 4 wherein the polypropylene composition comprises a blend of a propylene polymer and a second polymer having long chain branching.

6. A method according to any one of claims 1 to 5 further including adding a nucleating agent to the polypropylene composition.

7. A method according to claim 6 wherein the nucleating agent is sodium bicarbonate.

8. A method according to claim 6 wherein the nucleating agent is citric acid.

9. A method according to any one of the preceding claims wherein the polypropylene composition is heated to between 204°C and 232°C (400°F and 450°F).

10. A method according to any one of the preceding claims further including cooling the blowing agent-containing melt prior to extrusion.

11. A method according to claim 10 wherein the blowing agent-containing melt is cooled to between 149°C and 171°C (300°F and 340°F) prior to extrusion.

12. A method according to any one of claims 1 to 11 for producing a thermoformed, foamed article further comprising the step of thermoforming the sheet into a plurality of articles.

13. A method according to claim 12 further including trimming excess, non-formed sheet from the thermoformed articles, thereby forming scrap.

14. A method according to claim 13 further including blending the scrap into the polypropylene composition.

15. A method according to any one of claims 12 to 14 wherein the blowing agent is carbon dioxide and a volatile hydrocarbon, wherein the carbon dioxide is present insufficient amounts to allow thermoforming immediately after extrusion without substantial intermediate aging.

16. A method according to any one of claims 12 to 14, wherein the blowing agent is carbon dioxide and the sheet is substantially free of volatile components, wherein the absence of volatile components allow thermoforming immediately after the extrusion of the sheet without intermediate aging.

17. A foamed, thermoformed article comprising polypropylene, substantially free of any volatile hydrocarbon residue.

18. An article according to claim 17 which is a tray for food packaging and support.

19. A method for producing a polypropylene foam sheet comprising:
    providing a polypropylene having uniform melt draw properties;
    heating the polypropylene to form a melt;
    injecting a blowing agent into the melt; and
    extruding the blowing agent-containing melt into a sheet.

20. A method for producing a polypropylene foam sheet comprising:
    providing a rubber modified linear polypropylene;
    heating the polypropylene to form a melt;
    injecting a blowing agent into the melt; and
    extruding the blowing agent-containing melt into a sheet.

EP 0 570 221 A2

P. P.

CITRIC ACID
Na BICARBONATE

10 — EXTRUDER

MIXING
SECTION

PENTANE $CO_2$

20

70

FOAM

40

30

60

80

50

COOLING EXTRUDER

**FIG. 1**

72

70

40

74

30

76

60

82

80

84

86

50

**FIG. 2**